Europäisches Patentamt

European Patent Office

Office européen des brevets

(11) Publication number: **0 583 812 A1**

# EUROPEAN PATENT APPLICATION

(21) Application number: **93202098.5**

(51) Int. Cl.5: **G06F 11/00**

(22) Date of filing: **19.07.93**

(30) Priority: **14.08.92 NL 9201459**

(43) Date of publication of application:
**23.02.94 Bulletin 94/08**

(84) Designated Contracting States:
**AT BE CH DE DK ES FR GB GR IE IT LI LU NL PT SE**

(71) Applicant: **Koninklijke PTT Nederland N.V.**
**P.O. Box 95321**
**NL-2509 CH The Hague(NL)**

(72) Inventor: **Bakker, Franciscus Cornelia**
**315 Grashof**
**NL-2262 EW Leidschendam(NL)**
Inventor: **Witteman, Marcus Franciscus**
**Westerstraat 14**
**NL-2613 RH Delft(NL)**
Inventor: **Van Wuijtswinkel, Ronald Carolus**
**20 De Haar**
**NL-2261 XT Leidschendam(NL)**

(54) **Method for testing software, method for creating testable software, and system provided with testable software.**

(57) Known methods for testing software test the software, before the software has become operational, as a whole or in separate parts, the interaction between said parts not being dealt with. This has drawbacks. The method according to the invention is based on the known hardware "Boundary Scan Test" for ICs and provides the possibility of testing operational software in separate sections, the interaction between said sections being included in the testing.

EP 0 583 812 A1

Rank Xerox (UK) Business Services
(3.10/3.09/3.3.4)

A Background of the invention

The invention relates to a method for testing software, which software comprises at least one section having a first and a second point for transmitting information from the first to the second point.

A method of this type is generally known. In this context, the software obviously comprises various sections where information is transmitted between two points (such as, for example, a telecommunications protocol). By supplying a defined input to the software and then tracing whether the output meets expectations, the software is tested as a whole or in separate parts. This is done before the software becomes operational, and, if testing is carried out in separate parts, without the interaction of these parts being dealt with. Such a known method has the drawback, particularly if the software is of complex form, that the testing as a whole provides insufficient data concerning the separate parts and that testing of the separate parts takes place without including the interaction between these parts. Furthermore, testing in this context takes place before the software becomes operational, while testing of operational software would be able to provide many more data, in particular if parts of the software have in the meantime been replaced by newer parts.

B Summary of the invention

The object of the invention is, inter alia, to provide a method of the type mentioned in the preamble with which separate parts of operational software can be tested, in which method the interaction between said parts should likewise be included in the testing.

To this end, the method according to the invention is characterised in that the software comprises a software module for tapping off the information via the first point and for inserting other information via the second point, which software further comprises a control software module for transmitting the information to be tapped off from the software module to the control software module and for transmitting the other information to be inserted from the control software module to the software module, the testing of the software taking place via the software module by the control software module.

By adding the software module at one or more locations in the software to be tested, which software module can tap off the information present at that location and insert the other information, it becomes possible to test operational software in separate parts. The information tapped off is transmitted in this case to the control software module which further processes this information and which generates the other information which is inserted subsequently, in order to check the reaction of the software thereto elsewhere. This can be used to include in the testing the interaction between the parts to be tested separately.

The invention is based on the insight that the known hardware "Boundary Scan Test" technique which is applied, in particular, to ICs in order to test ICs in operation and thereby to test separate parts of complex circuits, can be applied to software (such as telecommunications protocols) in an adapted software form.

A first embodiment of the method according to the invention is characterised in that the software module comprises a first subpoint linked to the first point, a second subpoint linked to the second point and a third subpoint linked to the control software module, which software module is designed for linking through, as a function of a first control instruction originating from the control software module, the first subpoint to the second subpoint and for linking through, as a function of a second control instruction originating from the control software module, the first subpoint to the third subpoint.

The tapping-off of information via the first and the third subpoint, and the insertion of other information via the third and the second subpoint provides the most efficient manner of testing and verifying the software section in question.

The invention further relates to a method for creating testable software, which software comprises at least one section having a first and a second point for transmitting information from the first to the second point.

This method according to the invention is characterised in that the software is provided with a software module associated with the section for tapping off the information via the first point and for inserting other information via the second point, the software further being provided with a control software module for transmitting the information to be tapped off from the software module to the control software module and for transmitting the other information to be inserted from the control software module to the software module, which control software module is designed for testing the software via the software module.

A first embodiment of this method is characterised in that the software module comprises a first subpoint linked to the first point, a second subpoint linked to the second point and a third subpoint linked to the control software module, which software module is designed for linking through, as a function of a first control instruction originating from the control software module, the first subpoint to the second subpoint

2

and for linking through, as a function of a second control instruction originating from the control software module, the first subpoint to the third subpoint.

The invention still further relates to a system provided with testable software, which system comprises at least one section having a first and a second point for transmitting, as a function of the software, information from the first to the second point.

The system according to the invention is characterised in that the system is designed for tapping off, as a function of a software module, the information via the first point and inserting other information via the second point, the system further being designed for transmitting, as a function of a control software module, the information to be tapped off from the first point to a third point and transmitting the other information to be inserted from the third point to the second point.

A first embodiment of the system is characterised in that the system comprises a first subpoint linked to the first point, a second subpoint linked to the second point and a third subpoint linked to the third point, the system being designed for linking through, as a function of a first control instruction originating from the control software module and intended for the software module, the first subpoint to the second subpoint and for linking through, as a function of a second control instruction originating from the control software module and intended for the software module, the first subpoint to the third subpoint.


C References


■    EP 0 382 360 (hardware Boundary Scan Test)
■    ISO 9646 (OSI Conformance testing methodology and framework 1992)


D Illustrative embodiment


The invention will be explained in more detail with reference to an illustrative embodiment depicted in the figures, in which:
Figure 1 shows a diagram of an information flow associated with the method according to the invention,
Figure 2 shows a diagram of another information flow associated with the method according to the invention, and
Figure 3 shows a flow chart of the method according to the invention.

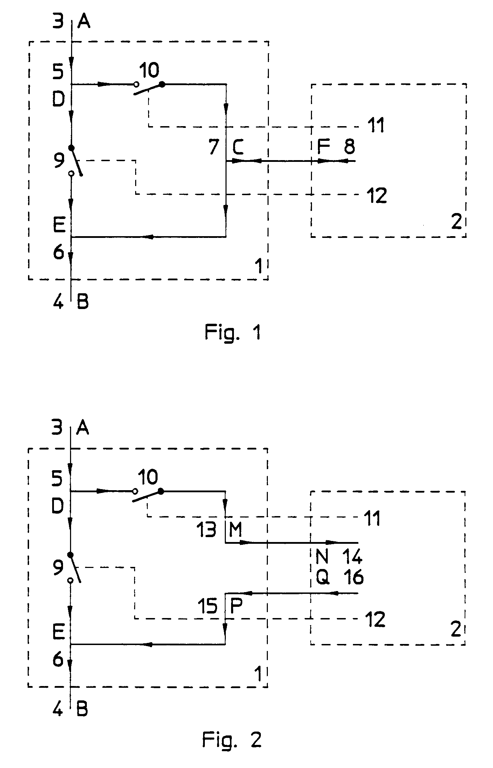

The diagram depicted in Figure 1 of an information flow shows a first point 3 and a first subpoint 5 linked thereto, a second point 4 and a second subpoint 6 linked thereto, and furthermore a third subpoint 7. The first subpoint 5 is linkable, via first through-linking means 9, to the second subpoint 6, and the first subpoint 5 is linkable, via second through-linking means 10, to the third subpoint 7. The first point 3 and the second point 4 form, for example, a section of software to be tested, information (for example data containing an address) being transmitted from first point 3 to second point 4. First subpoint 5, second subpoint 6, third subpoint 7 and through-linking means 9 and 10 form, for example, a software module 1 for tapping off information via first point 3, first subpoint 5 and third subpoint 7 (in which case through-linking means 10 should be in the closed state) and for inserting other information via third subpoint 7, second subpoint 6 and second point 4 (in which case through-linking means 9 should be in the open state). If through-linking means 9 are in the closed state, information is transmitted from first point 3, via first subpoint 5 and second subpoint 6 to second point 4. Through-linking means 9 are controlled by means of a first control instruction 12 originating from a control software module 2, and through-linking means 10 are controlled by means of a second control instruction 11 originating from a control software module 2. Control software module 2 comprises a third point 8 which is linked to the third subpoint 7. From software module 1, the information tapped off is transmitted via third subpoint 7 and third point 8 to control software module 2, and from the latter, the information to be inserted is transmitted via third point 8 and third subpoint 7 to software module 1.

The diagram depicted in Figure 1 is of symbolic significance: the bidirectional linkage between third subpoint 7 and third point 8 could, as depicted in Figure 2, be replaced by two unidirectional linkages, and through-linking means 9 and 10 should be seen as gateways, which may be provided with memory elements (or queues) for passing on information, possibly in buffered form. Furthermore, according to the diagram depicted in Figure 1 it is obviously not possible to transmit the information from first point 3, via first subpoint 5, third subpoint 7 and second subpoint 6 to second point 4. This will be clarified in the context of the description of Figure 2.

If the software contains a program written in a BASIC language, first point 3 (a variable A associated therewith is then, for example, given the value "info") and second point 4 could be seen as two successive lines containing BASIC instructions (a variable B associated therewith is then, without a software module present, given the value of the variable A), for example line 100 and line 110, where in a normal context information is transmitted from line 100 to line 110. In the software module 1 and the control software module 2, a variable C in this case, which is intended as an example, is associated with the third subpoint 7, a variable D with the first subpoint 5, a variable E with the second subpoint 6 and a variable F with the third point 8. Software module 1 could then be of the following form:

```
100 (A: = info) & (F: = other info)
101 D: = A
102 IF through-linking means 9 = closed THEN E: = D
103 IF through-linking means 9 = open THEN (C: = F) & (E: = C)
104 IF through-linking means 10 = closed THEN (C: = D) & (F: = C)
105 B: = E
106 GOTO 110
110 B etc.
```

At the location of first point 3, the variable A is given the value "info", ie. the information has arrived at first point 3, and the variable F is given the value "other info", obviously only if the other information should be inserted (line 100). This information then enters the software module by the variable D being given, at the location of first subpoint 5, the value of the variable A (line 101). If the through-linking means 9 are in the closed state, the information is transmitted to second subpoint 6, by the variable E being given the value of the variable D (line 102). If the through-linking means 9 are in the open state, the other information to be inserted is transmitted to second subpoint 6 by, first of all, the variable C being given the value of the variable F and then the variable E being given the value of the variable C (line 103). If the through-linking means 10 are in the closed state, the information tapped off is transmitted to third subpoint 7 and third point 8, by, first of all, the variable C being given the value of the variable D and then the variable F being given the value of the variable C (line 104). Subsequently, the information or the other inserted information is transmitted to second point 4 by the variable B being given the value of the variable E (line 105). Thereupon, the information or the inserted other information has left the software module (line 106) and the procedure continues with further processing and/or transmitting of the information (line 110). Control software module 2, after the variable F has been given the value of variable C, performs an operation on the variable F (this then is the information tapped off), or has already performed an operation on the variable F, before the variable C has been given the value of the variable F (this then is the information to be inserted). These operations obviously depend on the manner in which, and the degree to which, the software should be tested and/or verified, and they are described, for example, in the ISO 9646 cited earlier.

The diagram depicted in Figure 2 of another information flow differs from the diagram shown in Figure 1 only by the use of two unidirectional linkages instead of the single bidirectional linkage between the software module 1 and the control software module 2. In this case, third subpoint 7 has been replaced by, on the one hand, a point 13 (with variable M) which connects through-linking means 10 to a point 14 (with variable N) present in the control software module 2 and, on the other hand, by a point 15 (with variable P) which connects a point 16 (with variable Q) present in the control software module 2 to second subpoint 6. The use of the two unidirectional linkages makes it possible, when employing two parallel processes, simultaneously to tap off the information via point 13 and 14 and to insert the other information via point 16 and 15. If one process is employed, the simultaneous performance of two actions is naturally impossible.

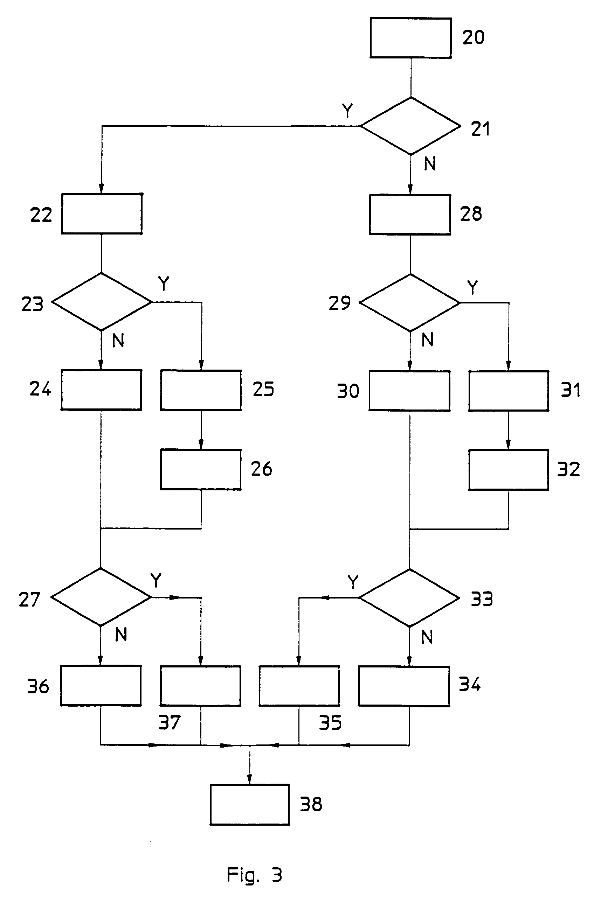

In the flow chart, depicted in Figure 3, of the method according to the invention, which flow chart is related to the information flow depicted in Figure 1, the boxes have the following meaning:

**box          meaning**

**20          the information arrives at the location of first point 3 and first**

subpoint 5, goto box 21

21    are through-linking means 9 in the closed state?

if yes: goto box 22

if no: goto box 28

22    the information arrives at the location of second subpoint 6 and second point 4, goto box 23

23    are through-linking means 10 in the closed state?

if yes: goto box 25

if no: goto box 24

24    the information is not tapped off, goto box 27

25    the information also arrives at the location of third subpoint 7 and third point 8, goto box 26

26    the information has been tapped off, goto box 27

27    should the other information be inserted?

if yes: goto box 37

if no: goto box 36

28    the information is still at the location of first point 3 and first subpoint 5, goto box 29

29      are through-linking means 10 in the closed state?

if yes: goto box 31

if no: goto box 30

30      the information is not tapped off, goto box 33

31      the information arrives at the location of third subpoint 7 and third point 8, goto box 32

32      the information has been tapped off, goto box 33

33      should the other information be inserted?

if yes: goto box 35

if no: goto box 34

34      the other information is not inserted, and the original information does not leave (tapped off or not) the software module 1, goto box 38

35      the other information arrives at the location of second subpoint 6 and second point 4 and leaves the software module 1, goto box 38

36      the information leaves the software module 1, goto box 38

37      the information leaves the software module 1, and the other information arrives at the location of second subpoint 6 and

## second point 4, and leaves the software module 1, goto box 38

38            end

The method according to the invention as indicated in Figure 3 proceeds as follows. The information arrives at the location of first point 3 and first subpoint 5 (box 20). A check is then carried out whether through-linking means 9 are in the closed state (box 21).

If this is so, the information arrives at the location of the second subpoint 6 and the second point 4 (box 22). A check is then carried out whether through-linking means 10 are in the closed state (box 23), and if this is so, the information also arrives at the location of the third subpoint 7 and the third point 8 (box 25), whereby this information has been tapped off (box 26). Thereafter, and when the through-linking means 10 are not in the closed state, in which case the information has not been tapped off (box 24), a check is carried out whether the other information should be inserted from the control software module (box 27). If no other information should be inserted, the information leaves the software module 1 (box 36), and if the other information should be inserted, the information leaves the software module 1 and the other information arrives at the location of the second subpoint 6 and the second point 4, whereafter said inserted other information leaves the software module 1 (box 37). The method according to the invention subsequently terminates (box 38). Thereafter it would be possible to restart with box 20.

If through-linking means 9 are not in the closed state (box 21) the information is still at the first point 3 and the first subpoint 5 (box 28), whereupon a check is carried out whether through-linking means 10 are in the closed state (box 29). If this is so, the information arrives at the third subpoint 7 and the third point 8 (box 31) whereby this information has been tapped off (box 32). If through-linking means 10 are not in the closed state (box 29) the information is not tapped off (box 30). Both if the information has been tapped off and if the information has not been tapped off, a check is then carried out whether the other information should be inserted from the control software module (box 33). If no other information should be inserted, the original information therefore does not for the time being leave the software module 1 (box 34), and if other information should indeed be inserted, the other information arrives at the location of the second subpoint 6 and the second point 4, whereupon said inserted other information leaves the software module 1 (box 35). The method according to the invention subsequently terminates (box 38). Thereafter it would be possible to restart with box 20.

It should be noted that the illustrative embodiment described is only one possible embodiment of the method according to the invention, and that many other variations thereon are conceivable. Thus, other sequential orders of the boxes depicted in Figure 3 will likewise produce good results (the initial check whether through-linking means 9 are in the closed state and the subsequent check whether through-linking means 10 are in the closed state can also be reversed) and it is not absolutely necesssary for through-linking means 9 to be in the open state before the other information can be inserted, as suggested by line 103 of the program written in a BASIC language. Furthermore, all other programming languages are also suitable for this purpose, and the variables A,B,C,D,E and F used herein should be interpreted with as wide a range of meanings as possible because, for example, they may comprise both data and an address.

**Claims**

1. Method for testing software, which software comprises at least one section having a first and a second point for transmitting information from the first to the second point, characterised in that the software comprises a software module for tapping off the information via the first point and for inserting other information via the second point, which software further comprises a control software module for transmitting the information to be tapped off from the software module to the control software module and for transmitting the other information to be inserted from the control software module to the software module, the testing of the software taking place via the software module by the control software module.

2. Method according to Claim 1, characterised in that the software module comprises a first subpoint linked to the first point, a second subpoint linked to the second point and a third subpoint linked to the control software module, which software module is designed for linking through, as a function of a first control instruction originating from the control software module, the first subpoint to the second subpoint and for linking through, as a function of a second control instruction originating from the control software module, the first subpoint to the third subpoint.

3. Method for creating testable software, which software comprises at least one section having a first and a second point for transmitting information from the first to the second point, characterised in that the software is provided with a software module associated with the section for tapping off the information via the first point and for inserting other information via the second point, the software further being provided with a control software module for transmitting the information to be tapped off from the software module to the control software module and for transmitting the other information to be inserted from the control software module to the software module, which control software module is designed for testing the software via the software module.

4. Method according to Claim 3, characterised in that the software module comprises a first subpoint linked to the first point, a second subpoint linked to the second point and a third subpoint linked to the control software module, which software module is designed for linking through, as a function of a first control instruction originating from the control software module, the first subpoint to the second subpoint and for linking through, as a function of a second control instruction originating from the control software module, the first subpoint to the third subpoint.

5. System provided with testable software, which system comprises at least one section having a first and a second point for transmitting, as a function of the software, information from the first to the second point, characterised in that the system is designed for tapping off, as a function of a software module, the information via the first point and inserting other information via the second point, the system further being designed for transmitting, as a function of a control software module, the information to be tapped off from the first point to a third point and transmitting the other information to be inserted from the third point to the second point.

6. Method according to Claim 5, characterised in that the system comprises a first subpoint linked to the first point, a second subpoint linked to the second point and a third subpoint linked to the third point, the system being designed for linking through, as a function of a first control instruction originating from the control software module and intended for the software module, the first subpoint to the second subpoint and for linking through, as a function of a second control instruction originating from the control software module and intended for the software module, the first subpoint to the third subpoint.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 595 981 (LEUNG) <br> * column 2, line 30 - line 58 * | 1-6 | G06F11/00 |
| A | HEWLETT-PACKARD JOURNAL <br> vol. 37, no. 3 , March 1986 , PALO ALTO US <br> pages 35 - 36 <br> JOHN R. BUGARIN 'Triggers: A Software Testing Tool' <br> * page 36, left column, line 23 - line 51 * | 1-6 | |
| A | PROCEEDINGS OF THE CONFERENCE ON SOFTWARE MAINTENANCE-1988 27 October 1988 , PHOENIX, ARIZONA <br> pages 404 - 408 <br> TOMAZ DOGSA ET AL. 'CAMOTE - Computer Aided MOdule TEsting and design environment' <br> * page 406, left column, line 6 - line 26 * | 1-6 | |

TECHNICAL FIELDS SEARCHED (Int.Cl.5)

G06F

The present search report has been drawn up for all claims

| Place of search | Date of completion of the search | Examiner |
|---|---|---|
| THE HAGUE | 30 November 1993 | Corremans, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document